# EUROPÄISCHE PATENTANMELDUNG

(11) **EP 1 688 456 A1**
(43) Veröffentlichungstag der Anmeldung: **09.08.2006**
(21) Anmeldenummer: 06101213.4
(22) Anmeldetag: 02.02.2006
(51) Int. Cl.: C08K 5/00, C08K 5/17, C08K 5/42, C08K 11/00, C08K 3/28

(54) **Thermisch härtbare Bindemittel, enthaltend einen optischen Aufheller**

(30) Priorität: 02.02.2005 DE 102005004903
(71) Anmelder: BASF Aktiengesellschaft, 67056 Ludwigshafen (DE)
(72) Erfinder: Michl, Kathrin, 67063, Ludwigshafen (DE); Gerst, Matthias, 67435, Neustadt (DE)

(57) **Zusammenfassung**

Wässrige Bindemittel, enthaltend
A) ein durch radikalische Polymerisation von ethylenisch ungesättigten Verbindungen erhältliches Polymer oder Polymergemisch, welches zu 5 bis 100 Gew.-% aus ethylenisch ungesättigten Carbonsäuren, Dicarbonsäuren, Dicarbonsäureanhydriden oder deren Gemische (zusammenfassend kurz Säure-Monomere genannt) besteht
B) ein Alkanolamin mit mindestens zwei Hydroxylgruppen und
C) Vergilbungsinhibitor

## Beschreibung

Die Erfindung betrifft wässrige Bindemittel, enthaltend
A) ein durch radikalische Polymerisation von ethylenisch ungesättigten Verbindungen erhältliches Polymer oder Polymergemisch, welches zu 5 bis 100 Gew.-% aus ethylenisch ungesättigten Carbonsäuren, Dicarbonsäuren, Dicarbonsäureanhydriden oder deren Gemische (zusammenfassend kurz Säure-Monomere genannt) besteht
B) ein Alkanolamin mit mindestens zwei Hydroxylgruppen und
C) einen Vergilbungsinhibitor.

Desweiteren betrifft die Erfindung die Verwendung der Bindemittel zur Beschichtung oder Imprägnierung von Papier oder Faservliesen.

Aus EP-A 583 086 und WO 97/31036 sind wässrige Bindemittel bekannt, welche Polymere mit Säure- oder Anhydridgruppen und Alkohole oder Amine als Vernetzer enthalten. Die Bindemittel werden als Beschichtungs- oder Imprägniermittel verwendet. Bei den zur Vernetzung erforderlichen hohen Temperaturen ist oft eine unerwünschte Vergilbung zu beobachten.

In DE-A 19 02 459 wird ein Verfahren zur optischen Aufhellung von Vliesstoffen beschrieben, bei dem Polymere, welche einen optischen Aufheller einpolymerisiert enthalten, eingesetzt werden. Bei diesem Verfahren besteht keine Flexibilität hinsichtlich der Art und Menge des optischen Aufhellers.

Aufgabe der vorliegenden Erfindung waren wässrige Bindemittel, welche auch bei hohen Härtungstemperaturen nicht vergilben und bei denen Flexibilität hinsichtlich Art und Menge des optischen Aufhellers besteht. Insbesondere sollen Art und Menge des optischen Aufhellers so gewählt werden können, dass über die erreichte Aufhellung die Vernetzungsreaktion überwacht werden kann.

Dem gemäß wurde das eingangs definierte Bindemittel und seine Verwendung gefunden. Gefunden wurde auch ein Verfahren zur kontrollierten Vernetzung der wässrigen Bindemittel.

Das erfindungsgemäße wässrige Bindemittel enthält ein Polymer oder Polymergemisch A), ein Alkanolamin B) und einen Vergilbungsinhibitor C).

### Zum Polymer oder Polymergemisch A)

Das Polymer ist durch radikalische Polymerisation von ethylenisch ungesättigten Verbindungen (Monomere) erhältlich. Soweit im folgenden davon die Rede ist, dass das Polymer aus diesem Monomeren besteht, ist zu beachten, dass die Monomeren nach der Polymerisation natürlich nicht mehr als ethylenisch ungesättige Verbindungen vorliegen.

Das Polymer oder die Polymeren des Polymergemisches A) bestehen zu 5 bis 100 Gew.-% aus ethylenisch ungesättigten Carbonsäuren, Dicarbonsäuren, Dicarbonsäureanhydriden oder deren Gemische (zusammenfassend kurz Säure-Monomere genannt).

Die Säuren können auch in Form ihrer Salze vorliegen.

Als Säure-Monomere kommen z. B. monoethylenisch ungesättigte C₃- bis C₁₀-Monocarbonsäuren, wie Acrylsäure, Methacrylsäure, Ethylacrylsäure, Allylessigsäure, Crotonsäure, Vinylessigsäure, Maleinsäurehalbester wie Maleinsäuremonomethylester, deren Mischungen bzw. deren Alkali- und Ammoniumsalze in Betracht.

Als Säure- Monomere ebenfalls in Betracht kommen ethylenisch ungesättigte Dicarbonsäureanhydride oder Dicarbonsäuren, deren Carbonsäuregruppen eine Anhydridgruppe bilden können (zusammenfassend kurz Anhydrid-Monomere genannt).

Als Anhydrid-Monomere werden bevorzugt Maleinsäure, Maleinsäureanhydrid, Itaconsäure, 1,2,3,6-Tetrahydrophthalsäure, 1,2,3,6-Tertahydrophthalsäureanhydrid, deren Alkali- und Ammoniumsalze oder Mischungen daraus. Besonders bevorzugt sind Maleinsäure und Maleinsäureanhydrid.

Das Polymer oder Polymergemisch A) besteht vorzugsweise zu mindestens 10 Gew.-%, insbesondere zu mindestens 20 Gew.-%, besonders bevorzugt zu mindestens 40 Gew.-% aus den Säuremonomeren.

Das Polymer oder Polymergemisch A) kann ausschließlich aus Säure-Monomeren bestehen. Es reicht jedoch aus, wenn das Polymer oder Polymergemisch zu maximal 60 bzw. maximal 40 oder auch maximal 20 oder maximal 10 Gew.-% aus Säure-Monomeren besteht.

Säure-Monomere enthalten bevorzugt Anhydrid-Monomere.

Vorzugsweise handelt es sich bei mindestens 5 Gew.-%, insbesondere bei mindestens 10 und besonders bevorzugt bei mindestens 20 Gew.-% der Säure-Monomere um Anhydridmonomere.

Das Polymer oder Polymergemisch A) besteht vorzugsweise zu mindestens 5 Gew.-%, besonders bevorzugt zu mindestens 10 Gew. bzw. 20 Gew.-% aus Anhydrid-Monomeren.

Neben den Säure-Monomeren können weitere Monomere, ausgewählt aus C₁-C₂₀₋Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren mitverwendet werden.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 4 bis 8 C-Atomen und zwei olefinischen Doppelbindungen seien Butadien, Isopren und Chloropren genannt.

Als Hauptmonomere bevorzugt sind die C₁- bis C₁₀-Alkylacrylate und -methacrylate, insbesondere C₁- bis C₈-Alkylacrylate und -methacrylate und Vinylaromaten, insbesondere Styrol und deren Mischungen.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Neben den weiteren Monomeren kann das Polymer oder Polymergemisch Hilfsmonomere enthalten, z. B. Monomere mit Sulfonsäure oder Phosphonsäuregruppen.

Hilfsmonomere sind z. B. auch Hydroxylgruppen enthaltende Monomere, insbesondere C₁-C₁₀-Hydroxyalkyl(meth)acrylate, (Meth)acrylamid.

Als Hilfsmonomere seien darüberhinaus Phenyloxyethylglykolmono- (meth-)acrylat, Glycidylacrylat, Glycidylmethacrylat, Amino- (meth-)acrylate wie 2-Aminoethyl-(meth) acrylat genannt.

Als Hilfsmonomere seien auch vernetzende Monomere genannt.

Auch genannt seien noch N-Vinylformamid, N-Vinyl-N-methylformamid, N-Vinylpyrrolidon, N-Vinylimidazol, 1-Vinyl-2-methylimidazol, 1-Vinyl-2-methylimidazolon, N-Vinylcaprolactam, Allylalkohol, 2-Vinylpyridin, 4-Vinylpyridin, Acrolein, Methacrolein bzw. Mischungen davon.

Die Polymerisate können nach üblichen Polymerisationsverfahren hergestellt werden, z. B. durch Substanz-, Emulsions-, Suspesions-, Dispersions-, Fällungs und Lösungspolymerisation. Bei den genannten Polymerisationsverfahren wird bevorzugt unter Ausschluss von Sauerstoff gearbeitet, vorzugsweise in einem Stickstoffstrom. Für alle Polymerisationsmethoden werden die üblichen Apparaturen verwendet, z. B. Rührkessel, Rührkesselkaskaden, Autoklaven, Rohrreaktoren und Kneter. Bevorzugt wird nach der Methode der Lösungs-, Emulsions-, Fällungs- oder Suspensionspolymerisation gearbeitet. Besonders bevorzugt sind die Methoden der Lösungs- oder Verdünnungsmittel, wie z. B. Toluol, o-Xylol, p-Xylol, Cumol, Chlorbenzol, Ethylbenzol, technischen Mischungen von Alkylaromaten, Cyclohexan, technischen Aliphatenmischungen, Aceton, Cyclohexanon, Tetrahydrofuran, Dioxan, Glykolen und Glykolderivaten, Polyalkylenglykolen und deren Derivaten, Diethylether, tert.-Butylmethylether, Essigsäuremethylester, Isopropanol, Ethanol, Wasser oder Mischungen wie z. B. Isopropanol/Wasser-Mischungen ausgeführt werden. Vorzugsweise wird als Lösungs- oder Verdünnungsmittel Wasser gegebenenfalls mit Anteilen bis zu 60 Gew.-% an Alkoholen oder Glykolen verwendet. Besonders bevorzugt wird Wasser eingesetzt.

Beim Polymer A) handelt es sich vorzugsweise um ein Emulsionspolymerisat oder Lösungspolymerisat.

Im Falle eines Polymergemischs kann es sich z. B. um ein Gemisch von zwei oder mehr Emulsionspolymerisaten oder Lösungspolymerisaten handeln. Insbesondere kann es sich auch um ein Gemisch aus einem Emulsionspolymerisat und einem Lösungspolymerisat handeln.

Das Lösungspolymerisat kann z. B. als Schutzkolloid bei der Emulsionspolymerisation verwendet werden oder nachträglich zur wässrigen Dispersion des Emulsionspolymerisats gegeben werden.

Bevorzugt liegt Polymer oder Polymergemisch A) in Form einer wässrigen Dispersion oder Lösung mit Feststoffgehalten von vorzugsweise 10 bis 80 Gew.-%, insbesondere 30 bis 65 Gew.-% vor.

### Zum Alkanolamin B)

Als Komponente B) werden Alkanolamine mit mindestens zwei OH-Gruppen eingesetzt. Bevorzugt sind Alkanolamine der Formel 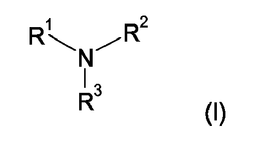 in der R¹ für ein H-Atom, eine C₁-C₁₀-Alkylgruppe oder eine C₁-C₁₀-Hydroxyalkylgruppe steht und R² und R³ für eine C₁-C₁₀-Hydroxyalkylgruppe stehen.

Besonders bevorzugt stehen R² und R³ unabhängig voneinander für C₂-C₅-Hydroxyalkylgruppe und R¹ für ein H-Atom, eine C₁-C₅-Alkylgruppe oder eine C₂-C₅-Hydroxyalkylgruppe.

Als Verbindungen der Formel I seien z. B. Diethanolamin, Triethanolamin, Düsopropanolamin, Trüsopropanolamin, Methyldiethanolamin, Butyldiethanolamin und Mathyldiisopropanolamin genannt. Besonders bevorzugt ist Triethanolamin.

Zur Herstellung der erfindungsgemäßen Bindemittel werden das Polymerisat A) und das Alkanolamin B) bevorzugt in einem solchen Verhältnis zueinander eingesetzt, dass das Molverhältnis von Caboxygruppen der Komponeten A) und der Hydroxylgruppen der Komponete B) 20 : 1 bis 1 : 1, bevorzugt 8 : 1 bis 5 : 1 und besonders bevorzugt 5 : 1 bis 1,7 : 1 beträgt (die Anhydridgruppen werden hierbei als 2 Carboxylgruppen berechnet).

Die Herstellung erfolgt z. B. in einfacher Weise durch Zugabe von B) zur wässrigen Dispersion oder Lösung von A).

### Zum Vergilbungsinhibitor C)

Vergilbungsinhibitoren C) sind als solche bekannt. Es handelt sich im allgemeinen um Verbindungen, welche bei der Verwendung des wässrigen Bindemittels eine Blaufärbung bewirken und so einer Vergilbung entgegenwirken und kompensieren.

Vergilbungsinhibitoren können als solche bereits blau gefärbt sein, in Betracht kommen blaue Farbstoffe oder blaue Pigmente.

Vergilbungsinhibitoren können als solche auch nicht blau, z. B. farblos sein; die Blaufärbung tritt dann erst unter den Anwendungsbedingungen ein. Bei letzterem handelt es sich z. B. um farblose Fluoreszenzfarbstoffe, wobei die Fluoreszenz erst in Kombination mit speziellen Zusatzstoffen, z. B. Lösemittel oder in Kombination mit dem beschichteten oder imprägnierten Substrat eintritt.

Unter Blaufärbung wird eine Farbe im Wellenlängenbereich von 400 bis 500 nm verstanden, der Begriff blau schließt daher blau-ähnliche Farben wie violett ein.

Vergilbungsinhibitoren C) sind vorzugsweise niedermolekulare Verbindungen mit einem Molgewicht kleiner 2000 g/mol, insbesondere kleiner 1000 g/mol, besonders bevorzugt kleiner 500 g/mol.

Vergilbungsinhibitoren C) sind weder an Polymer bzw. Polymergemisch A), noch an Alkanolamin B) oder sonstige Bestandteile des wässrigen Bindemittels gebunden.

Als blaue Farbstoffe oder Pigmente in Betracht kommen z. B. Phthalocyanin Derivate oder Triarylmethan Derivate, welche als Fastusol® P blau 58L bzw. Fastusol® P violett 48L erhältlich sind.

Als Fluoreszenzfarbstoffe seien z. B. 4,4' Distyryl-Biphenyl (Ciba® Tinopal® CBS-X), 4,4' Diamino-2,2' Stilbendisulfonsäure, Methylumbelliferon, Cumarin, Dihydrochinolin, 1,3 Diarylpyrazolin, Naphthalsäureamid, über CH = CH Bindungen verknüpfte Benzoxazol- , Benzisooxazol- oder Benzimidazol Derivate und durch Heterocycklen substituierte Pyrene in Betracht.

Bevorzugt sind Pigmente. Pigmente sind dabei definitionsgemäß Verbindungen, die in dem verwendeten Lösemittel zu weniger als 0,5 g/Liter, insbesondere weniger als 0,1 g/Liter löslich sind (21°C), also im wesentlichen als Feststoff vorliegen.

Der Vergilbungsinhibitor wird vorzugsweise in Form einer Lösung oder Dispersion verwendet. Besonders bevorzugt handelt es sich um eine Lösung oder Dispersion in Wasser oder einem Flüssigkeitsgemisch, welches zu mehr als 50 Gew.-% aus Wasser besteht.

Die Menge des Vergilbungsinhibitors beträgt im allgemeinen 5 bis 8000 ppm, vorzugsweise 50 bis 2000 ppm, bezogen auf die Summe aus A) + B) (fest, ohne Lösemittel).

Vorzugsweise wird die zur Kompensation der bei der späteren Härtung eintretenden Vergilbung benötigte Menge von C) vorab durch Härtung von A) und B) bestimmt.

Setzt man die so bestimmte Menge an C) ein, kann der Ablauf der Härtung von A) und B) über die Abnahme der anfänglichen Blaufärbung kontrolliert werden. Während der Härtung nimmt die Vergilbung zu, bis die Vergilbung die anfängliche Blaufärbung kompensiert. Sobald die Beschichtung farblos erscheint, ist die Härtung abgeschlossen. Das Erreichen der Farblosigkeit indiziert somit das Ende der Härtung.

Gegenstand der vorliegenden Erfindung ist daher auch ein Verfahren zur kontrollierten Vernetzung von wässrigen Bindemitteln, enthaltend
A) ein durch radikalische Polymerisation von ethylenisch ungesättigten Verbindungen erhältliches Polymer oder Polymergemisch, welches zu 5 bis 100 Gew. % aus ethylenisch ungesättigte Carbonsäuren, Dicarbonsäuren, Dicarbonsäureanhydriden oder deren Gemische (zusammenfassend kurz Säure-Monomere genannt) besteht
B) ein Alkanolamin mit mindestens zwei Hydroxylgruppen und
C) einen Vergilbungsinhibitor,
dadurch gekennzeichnet, dass
- das Polymer A) und Alkanolamin B) bei erhöhter Temperatur vernetzt werden und der Gelbton des erhaltenen Produkts bestimmt wird
- die zur Kompensierung dieses Gelbtons benötigte Menge an C) ermittelt wird und diese so ermittelte Menge C) in entsprechender Menge dem wässrigen Bindemittel, welches Polymer A) und Alkanolamin B) enthält und unter den gleichen Bedingungen vernetzt werden soll, zugesetzt wird und anschließend die Vernetzung des wässrigen Bindemittels, welches A), B) und C) enthält, durch Temperaturerhöhung erfolgt, wobei die Dauer der Vernetzungsreaktion durch die Färbung des Vernetzungsprodukts kontrolliert wird.

Die erfindungsgemäßen wässrigen Bindemittel können abhängig vom Verwendungszweck weitere Bestandteile enthalten. In Betracht kommen z. B. Hydrophobierungsmittel, Benetzungsmittel, Verlaufshilfsmittel, Verdicker, Farbstoffe oder Pigmente.

In Betracht kommen insbesondere auch Alkoxysilane, z. B. 3-Aminopropyltriethoxysilan als Benetzungsmittel.

Die wässrigen Bindemittel eignen sich insbesondere als Beschichtungs- oder Imprägnierungsmittel. Insbesondere eignen sie sich für die Beschichtung von Papier, z. B. für die Herstellung von Dekorlaminaten.

Insbesondere eignen sich die erfindungsgemäßen Bindemittel auch als Beschichtungs-und Imprägniermittel für Faservliese. Als Faservliese seien z. B. Vliese aus Cellulose, Celluloseacetat, Ester und Ether der Cellulose, Baumwolle, Hanf, tierische Fasern, wie Wolle oder Haare und insbesondere Vliese von synthetischen oder anorganischen Fasern, z. B. Aramid-, Kohlenstoff-, Polyacrylnitril-, Polyester-. Mineral-, PVC- oder Glasfasern genannt.

Im Falle der Verwendung als Bindemittel für Faservliese können die erfindungsgemä-βen Bindemittel z. B. folgende Zusatzstoffe enthalten: Silikate, Silikone, borhaltige Verbindungen, Gleitmittel, Benetzungsmittel.

Bevorzugt sind Glasfaservliese. Die ungebundenen Faservliese (Rohfaservliese), insbesondere aus Glasfasern, werden durch das erfindungsgemäße Bindemittel gebunden, d. h. verfestigt.

Dazu wird das erfindungsgemäße Bindemittel vorzugsweise im Gewichtsverhältnis Faser/Polymerisat A + B (fest) von 10 : 1 bis 1 : 1, besonders bevorzugt von 6 : 1 bis 3 : 1 auf das Rohfaservlies z. B. durch Beschichten, Imprägnieren, Tränken aufgebracht.

Das erfindungsgemäße Bindemittel wird dabei vorzugsweise in Form einer verdünnten wässrigen Zubereitung mit 95 bis 40 Gew.-% Wasser verwendet.

Nach dem Aufbringen des erfindungsgemäßen Bindemittels auf das Rohfaservlies erfolgt im allgemeinen eine Trocknung vorzugsweise bei 100 bis 400, insbesondere 130 bis 280°C, ganz besonders bevorzugt 130 bis 230°C über einen Zeitraum von vorzugsweise 10 Sekunden bis 10 Minuten, insbesondere von 10 Sekunden bis 3 Minuten.

Das erhaltene, gebundene Faservlies weist eine hohe Festigkeit im trockenen und nassen Zustand auf. Eine Vergilbung des gebundenen Faservlieses nach der Trocknung ist nicht bzw. kaum zu beobachten. Die erfindungsgemäßen Bindemittel erlauben insbesondere kurze Trocknungszeiten und auch niedrigere Trocknungstemperaturen.

Die gebundenen Faservliese, insbesondere Glasfaservliese eignen sich zur Verwendung als bzw. in Dachbahnen, als Trägermaterialien für Tapeten oder als Inliner bzw. Trägermaterial für Fußbodenbeläge z. B. aus PVC.

Mit dem erfindungsgemäßen Bindemitteln können beschichtete und imprägnierte Substrate erhalten werden, die trotz der hohen Reaktivität der Bestandteile A) und B) und trotz der hohen Härtungstemperaturen vergilbungsfrei sind.

### Beispiele

### Einsatzstoffe:

- Bindemittel I:: Copolymer aus 75 Gew.-%
Acrylsäure und 25 Gew.-% Maleinsäure
30 Gew.-Teile Triethanolamin auf 100 Gew.-Teile Copolymer
50 Gew.-%ige Lösung in Wasser
- Bindemittel II:: Schutzkolloid aus 70 Gew.-% Acrylsäure und 30 Gew.-% Maleinsäure bzw. Maleinsäureester für Emulsionspolymerisat aus Styrol, Butylacrylat
Zusammensetzung:
47,8 Gew.-Teile Schutzkolloid
47,8 Gew.-Teile Emulsionspolymerisat
4,4 Gew.-Teile Triethanolamin
50 Gew.-%ige Dispersion in Wasser
- Bindemittel III:: wie Bindemittel II, jedoch Emulsionspolymerisat aus Styrol, Methylmethacrylat

- Vergilbungsinhibitor V1:: Tinopal® CBS-X ein 4,4'-Distyryl-Biphenyl von Ciba
- Vergilbungsinhibitor V2:: Tinopal® APB-Z der Ciba
- Vergilbungsinhibitor V3:: Fastusol P violett 48L, ein Triarylmethanderivat der BASF
- Vergilbungsinhibitor V4:: Fastusol P blau 58L, ein Phthalocyaninderivat der BASF

### Beschichtung der Vliese:

Den Bindemitteln wurde 1 Gew.-Teil y-Aminopropyltriethoxysilan auf 100 Gew.-Teile Bindemittel (fest) und die in der Tabelle angegebenen Menge Vergilbungsinhibitor zugesetzt.

Es wurde ein unbehandeltes Glasfaservlies (ca. 50 g/m²) von 32 cm Länge und 28 cm Breite eingesetzt.

Die Vliese werden in Längstrichtung über ein Endlos-PES-Siebband zunächst durch eine 20 %-ige Bindemittelflotte und anschließend über eine Absaugvorrichtung geführt. Die Bandgeschwindigkeit beträgt 0,6 m/min. Über die verstellbare Stärke der Absaugung erfolgt die Dosierung des Nassauftrages. Im Falle eines Nassauftrages von ca. 100 % erhält man mit einer Flottenkonzentration des Bindemittels von 20 % einen Trockenauftrag von 20 % +/- 2 %.
Die Aushärtung der imprägnierten Vliese erfolgt auf einem PES-Store als Träger in einem Mathis-Trockner.

### Bestimmung des Farbwertes in Anlehnung an DIN 5033 und DIN 6174

Prüfmittel
Farbmessgerät LUCI 100, Fa. Dr. Lange
Kalibrierstandard, Fa. Dr. Lange
Glasküvettensatz, Fa. Dr. Lange
Küvettenträger und Lichtschutzkappe, Fa. Dr. Lange
Prüfkachel weiß

Prinzip der Messung:

Das Messgerät LUCI 100 arbeitet nach dem Spektralverfahren zur Farbmessung. Dieses Verfahren untergliedert sich in einen spektralphotometrischen und einen farbmetrischen Teil. Der spektralphotometrische Teil dient zur Aufnahme der Reflexionskennlinie.

Das vom Messkopf aufgenommene Licht wird mittels eines Konkavgitters in seine Spektrale Anteile zerlegt. Aus den gemessenen Reflexionsgraden ermittelt das Messgerät die einzelnen Farbwerte.

Die eingestellte Grundkonfiguration am Messgerät liefert die CIELab L*, a*, b* - Werte. (CIELab Systeme beschreibt Farbe exakt im Farbraum, das aus drei Koordinatenachsen gebildet wird: L*: Helligkeit, a*: rot-grün-Achse, b*: gelb-blau-Achse, negative b*-Werte sind blau, positive Werte stehen für gelbe Farben) sowie den Gelbwerten DIN 6167 Yi einer Probe.

**Tabelle: Ergebnisse**

| Beispiel Nr. | Bindemittel | Vergilbungsinhibitor | Menge Vergilbungsinhibitor [ppm] | Härtungstemperatur/ Zeit [°C]7[min] | Gelbwert Yi | b*-Wert |
|---|---|---|---|---|---|---|
| 1 | I | - | - | 180/2 | 7,6 | 3,9 |
| 2 | I | - | - | 200/2 | 14,0 | 7,0 |
| 3 | I | - | - | 220/2 | 29,0 | 14,5 |
| 4 | I | - | - | 220/5 | 36,5 | 18,0 |
| 5 | I | - | - | 220/10 | 41,9 | 19,9 |
| 6 | I | V1 | 100 | 180/2 | 5,2 | 2,6 |
| 7 | I | V1 | 100 | 200/2 | 12,8 | 6,3 |
| 8 | I | V 1 | 300 | 180/2 | 2,4 | 1,1 |
| 9 | I | V1 | 300 | 200/2 | 9,8 | 4,8 |
| 10 | I | V2 | 200 | 180/2 | 4,9 | 2,5 |
| 11 | I | V2 | 200 | 200/5 | 3,9 | 2,0 |
| 12 | I | V2 | 200 | 220/2 | 10,5 | 5,2 |
| 13 | I | V2 | 200 | 220/5 | 25,4 | 12,7 |
| 14 | I | V2 | 200 | 220/10 | 43,7 | 20,9 |
| 15 | I | V2 | 400 | 180/2 | 10,5 | 5,2 |
| 16 | I | V2 | 400 | 200/2 | 10,7 | 5,3 |
| 17 | I | V3 | 200 | 180/2 | 1,3 | 0,9 |
| 18 | I | V3 | 200 | 200/2 | 7,9 | 4,1 |
| 19 | I | V3 | 200 | 220/2 | 26,7 | 12,8 |
| 20 | I | V3 | 400 | 180/2 | -4,8 | -1,9 |
| 21 | I | V3 | 400 | 200/2 | 1,3 | 1,0 |
| 22 | I | V3 | 400 | 220/2 | 24,0 | 11,9 |
| 23 | I | V3 | 400 | 220/5 | 35,5 | 17,1 |
| 24 | I | V4 | 200 | 200/2 | -2,5 | 1,3 |
| 25 | I | V4 | 200 | 220/2 | 16,1 | 9,9 |
| 26 | I | V4 | 200 | 220/5 | 26,0 | 14,1 |
| 27 | I | V4 | 200 | 220/10 | 33,2 | 16,8 |
| 28 | I | V4 | 400 | 200/2 | -10,7 | -1,7 |
| 29 | I | V4 | 400 | 220/2 | 5,8 | 5,7 |
| 30 | I | V4 | 400 | 220/5 | 16,9 | 10,5 |
| 31 | I | V4 | 400 | 220/10 | 25,0 | 13,5 |
| 32 | II | - | - | 180/2 | 19,6 | 9,7 |
| 33 | II | - | - | 200/2 | 26,4 | 13,0 |

| | | | | | | |
|---|---|---|---|---|---|---|
| 34 | II | - | - | 220/2 | 35,4 | 16,9 |
| 35 | II | - | - | 220/5 | 44,6 | 20,9 |
| 36 | II | - | - | 220/10 | 50,0 | 22,7 |
| 37 | II | V3 | 400 | 180/2 | 12,8 | 6,2 |
| 38 | II | V3 | 400 | 200/2 | 18,9 | 9,1 |
| 39 | II | V3 | 400 | 220/2 | 32,4 | 15,3 |
| 40 | II | V3 | 800 | 180/2 | 0,6 | 0,4 |
| 41 | II | V3 | 800 | 200/2 | 11,1 | 5,2 |
| 42 | II | V3 | 800 | 220/2 | 25,8 | 11,8 |
| 43 | II | V3 | 800 | 220/5 | 39,4 | 17,8 |
| 44 | II | V3 | 800 | 220/10 | 48,1 | 21,0 |
| 45 | III | - | - | 180/2 | 16,3 | 8,2 |
| 46 | III | - | - | 200/2 | 20,8 | 10,4 |
| 47 | III | - | - | 220/2 | 30,0 | 14,8 |
| 48 | III | - | - | 220/5 | 36,8 | 17,8 |
| 49 | III | - | - | 220/10 | 44,0 | 20,7 |
| 50 | III | V3 | 400 | 180/2 | 7,2 | 3,6 |
| 51 | III | V3 | 400 | 200/2 | 13,2 | 6,5 |
| 52 | III | V3 | 400 | 220/2 | 25,9 | 12,4 |
| 53 | III | V3 | 800 | 200/2 | 1,1 | 0,7 |
| 54 | III | V3 | 800 | 220/2 | 19,0 | 8,9 |
| 55 | III | V3 | 800 | 220/5 | 31,0 | 14,4 |
| 56 | III | V3 | 800 | 220/10 | 41,7 | 18,9 |

## Patentansprüche

1. Wässrige Bindemittel, enthaltend
A) ein durch radikalische Polymerisation von ethylenisch ungesättigten Verbindungen erhältliches Polymer oder Polymergemisch, welches zu 5 bis 100 Gew.-% aus ethylenisch ungesättigten Carbonsäuren, Dicarbonsäuren, Dicarbonsäureanhydriden oder deren Gemische (zusammenfassend kurz Säure-Monomere genannt) besteht
B) ein Alkanolamin mit mindestens zwei Hydroxylgruppen und
C) Vergilbungsinhibitor

2. Wässrige Bindemittel gemäß Anspruch 1, **dadurch gekennzeichnet, dass** es sich bei den Säure-Monomeren um ethylenisch ungesättigte Dicarbonsäureanhydride oder Dicarbonsäuren, deren Carbonsäuregruppen eine Anhydridgruppe bilden können (zusammenfassend kurz Anhydrid-Monomere genannt) oder deren Gemische mit anderen Säure-Monomeren handelt.

3. Wässrige Bindemittel gemäß Ansprüche 1 oder 2, **dadurch gekennzeichnet, dass** das Polymer oder Polymergemisch zu mindestens 5 Gew.-% aus Anhydrid-Monomeren besteht.

4. Wässrige Bindemittel gemäß einem der Ansprüche 1 bis 3, **dadurch gekennzeichnet, dass** es sich bei dem Polymer oder Polymergemisch um ein Lösungspolymer, ein Emulsionspolymer oder Gemisch dieser Polymeren handelt.

5. Wässrige Bindemittel gemäß einem der Ansprüche 1 bis 4, **dadurch gekennzeichnet, dass** es sich bei dem Alkanolamin um eine Verbindung der Formel 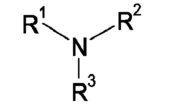 handelt, in der R¹ für ein H-Atom, eine C1 bis C10 Alkylgruppe oder eine C1 bis C10 Hydroxylalkylgruppe steht und R² und R³ für eine C1 bis C10 Hydroxylalkylgruppe stehen.

6. Wässrige Bindemittel gemäß einem der Ansprüche 1 bis 5, **dadurch gekennzeichnet, dass** es sich bei dem Vergilbungsinhibitor um eine Verbindung handelt, welche bei der Verwendung des wässrigen Bindemittels eine Blaufärbung bewirkt und so eine Vergilbung kompensiert.

7. Wässrige Bindemittel gemäß einem der Ansprüche 1 bis 6, **dadurch gekennzeichnet, dass** es sich bei dem Vergilbungsinhibitor um einen blauen Farbstoff, ein blaues Pigment oder unter Verwendungsbedingungen blau fluoreszierende Verbindung handelt.

8. Wässrige Bindemittel gemäß einem der Ansprüche 1 bis 7, **dadurch gekennzeichnet, dass** der Vergilbungsinhibitor in einer Menge von 5 bis 8000 ppm, bezogen auf die Summe aus A) + B) (fest, ohne Wasser oder Lösemittel) enthalten ist.

9. Verfahren zur kontrollierten Vernetzung von wässrigen Bindemitteln, enthaltend
A) ein durch radikalische Polymerisation von ethylenisch ungesättigten Verbindungen erhältliches Polymer oder Polymergemisch, welches zu 5 bis 100 Gew. % aus ethylenisch ungesättigte Carbonsäuren, Dicarbonsäuren, Dicarbonsäureanhydriden oder deren Gemische (zusammenfassend kurz Säure-Monomere genannt) besteht.
B) ein Alkanolamin mit mindestens zwei Hydroxylgruppen und
C) einen Vergilbungsinhibitor
**dadurch gekennzeichnet, dass**
- das Polymer A) und Alkanolamin B) bei erhöhter Temperatur vernetzt werden und der Gelbton des enthaltenen Produkts bestimmt wird
- die zur Kompensierung des Gelbtons benötigte Menge an C) ermittelt wird
und diese so ermittelte Menge C) in entsprechender Menge dem wässrigen Bindemittel, welches Polymer A) und Alkanolamin B) enthält und unter den gleichen Bedingungen vernetzt werden soll, zugesetzt wird und anschließend die Vernetzung des wässrigen Bindemittels, welches A), B) und C) enthält, durch Temperaturerhöhung erfolgt, wobei die Dauer der Vernetzungsreaktion durch die Färbung des Vernetzungsprodukts kontrolliert wird.

10. Verwendung der wässrigen Bindemittel gemäß einem der Ansprüche 1 bis 8 zur Beschichtung oder Imprägnierung von Faservliesen, insbesondere Glasfaservliese oder Papier.

11. Verwendung der wässrigen Bindemittel gemäß einem der Ansprüche 1 bis 8 für die Herstellung von Dekorlaminat.

12. Verwendung von Faservliesen gemäß Anspruch 10 zur Herstellung von Fußbodenbelägen.
